# FASCICULE DE BREVET EUROPEEN

(11) **EP 0 541 503 B1**
(45) Date de publication et mention de la délivrance du brevet: **28.12.1994**
(21) Numéro de dépôt: 92870172.1
(22) Date de dépôt: 21.10.1992
(51) Int. Cl.: G11B 17/22

(54) **Dispositif de transfert pour supports d'informations**
Transportvorrichtung für einen Informationsträger
Transfer device for an information carrier

(30) Priorité: 23.10.1991 BE 9100983
(43) Date de publication de la demande: 12.05.1993
(73) Titulaire: STAAR SOCIETE ANONYME, B-1200 Bruxelles (BE)
(72) Inventeur: d'Alayer de Costemore d'Arc, Stéphane Marie André, B-1474 Ways (BE)
(74) Mandataire: Overath, Philippe

(56) Documents cités:
- EP-A- 0 324 329
- EP-A- 0 344 814
- WO-A-87/07423
- DE-A- 4 121 297
- DE-B- 1 161 052
- US-A- 2 340 418
- US-A- 2 935 325

## Description

La présente invention se rapporte aux dispositifs de transfert de supports d'informations (disques, cassettes,...) et plus particulièrement aux dispositifs ou mécanismes assurant le transfert d'un support d'informations du magasin ou logement dans lequel il est contenu en position de stockage vers le mécanisme.devant en assurer la mise en position opérative en vue de la reproduction et/ou l'enregistrement d'informations à sa surface et vice-versa.

Elle trouve une application particulière dans les changeurs de supports d'informations tels les disques optiques, et notamment ceux du type compact disque.

Si dans de tels changeurs, les disques sont souvent contenus dans des cartouches de protection ou des boîtiers, le prix de revient et l'encombrement de ces appareils font en sorte qu'ils ne trouvent qu'une application professionnelle. Afin de vulgariser l'utilisation de changeurs au niveau grand public, il faut impérativement en réduire le prix de revient et par conséquent, stocker les disques tels quels, c'est-à-dire sans cartouche de protection pour chacun d'entre eux.

Il convient donc d'utiliser un mécanisme de transfert de disques aussi simple que possible mais dont la précision de fonctionnement doit être élevée afin de pouvoir stocker les disques le plus près possible les uns des autres pour obtenir un appareil soit de faibles dimensions soit contenant le plus grand nombre possible de disques pour un encombrement donné.

D'autre part, la simplicité du mécanisme de transfert doit permettre d'en réduire le coût de fabrication et d'obtenir une grande fiabilité.

Un tel mécanisme de transfert de disques permettrait également de proposer des changeurs très compacts et donc satisfaisant à des normes d'encombrement bien précises, notamment en largeur et hauteur.

De nombreux dispositifs et/ou mécanismes de transfert de disques ou cassettes ont été proposés dans le passé mais ils sont soit encombrants, soit peu précis, soit compliqués, soit encore nécessitent un mécanisme supplémentaire pour les séparer de la périphérie du disque afin d'en permettre la libre rotation lorsque ce dernier est en position opérative.

La demande internationale WO-A-87/07423 propose un mécanisme de transfert emprisonnant des disques afin de bien en guider la translation mais requérant un déplacement latéral du disque dans un logement plus large prévu dans ledit mécanisme de transfert afin d'en permettre la libre rotation en position opérative. Un tel système requiert une grande précision pour les différentes pièces, notamment celles assurant le retour du disque dans le logement le plus étroit après sa lecture et grève inévitablement le prix de fabrication.

D'autre part, toute imperfection à la périphérie du disque ou des surfaces de roulement risque de mettre le disque en travers et donc soit d'en endommager la surface par contact avec les parois, soit d'en bloquer la translation.

Enfin, comme on peut le noter, ce système de transfert n'autorise qu'un maintien approximatif des disques en position de stockage puisque les deux points de guidage et maintien doivent rester très proches.

La demande britannique GB-A-2.161.013 propose un mécanisme de transfert similaire au précédent mais ne nécessitant pas un second logement du fait que l'espacement entre les deux doigts guidant le disque est tel que ce dernier peut librement tourner en position opérative.

Cependant, un tel système n'assure qu'un guidage très imprécis du disque et ne peut être mis en oeuvre qu'avec un magasin maintenant approximativement les disques - les deux points de maintien sont également très proches - et nécessitant des parois de séparation ce qui grève le prix du magasin, réduit le nombre de disques qu'il peut stocker et risque de causer un endommagement des surfaces du disque lors du mouvement de transfert de ce dernier. Un système similaire et donc comportant le même genre d'inconvénients est proposé dans la publication allemande DE-A-1.161.052. Enfin, le brevet US-A-2.935.325 propose des moyens de transfert pour disques assurant le transfert de disques situés à des parties opposées d'un magasin vers une position centrale de reproduction et dévoile deux mécanismes comportant chacun une paire de bras mobiles, reliés par des moyens de compensation auto-actionnés et commandés par un axe unique pour d'une part emprisonner un disque à deux endroits diamétralement opposés en vue de son transfert et d'autre part, s'écarter du disque lorsque celui-ci est en position de stockage ou de reproduction. Ce dispositif necéssite des moyens complexes composés de nombreux leviers de commande et de ressorts qui doivent être réalisés avec une grande précision et un équilibrage parfait des ressorts pour obtenir un fonctionnement correct.

Le but de la présente invention est donc de remédier aux inconvénients précités en proposant un dispositif de transfert simple et bon marché, assurant à la fois un guidage précis du disque lors de son transfert et sa libre rotation en position opérative.

Un second but de l'invention est de proposer un dispositif de transfert aussi compact que possible afin de ne pas augmenter l'encombrement du changeur.

Un troisième but de l'invention est de faire en sorte que le dispositif de transfert permette l'utilisation d'un magasin stockant les disques qui soit d'un dessin aussi simple que possible pour en réduire le coût de fabrication, qui assure un maintien très efficace des disques et enfin permette de placer les disques le plus près possible les uns des autres pour en stocker le plus grand nombre dans un volume donné.

Un quatrième but de l'invention est de proposer un dispositif de transfert évitant au disque tout contact entre de l'une de ses surfaces et une paroi quelconque soit de l'appareil de reproduction et/ou d'enregistrement soit du magasin de stockage.

En vue de la réalisation de ces buts, le dispositif objet de l'invention est essentiellement caractérisé par le contenu de la première revendication.

D'autres avantages, caractéristiques et particularités de l'invention ressortiront de la description détaillée, donnée ci-après, à titre non limitatif d'un mode de réalisation préféré appliqué à un changeur de disques du type compact disque et pour lequel :
- la figure 1 est une vue de dessus de l'appareil changeur de disques,
- la figure 2 est une vue de face de l'appareil selon le plan de coupe A-A et dans laquelle on n'a représenté que les éléments essentiels à la compréhension de l'invention,
- la figure 2A est une vue latérale partielle de certains éléments représentés à la figure 2,
- la figure 3 est similaire à la figure 2, un disque étant transféré de sa position de repos vers sa position opérative,
- la figure 4 est similaire aux figures 2 et 3 et représente le disque positionné en face de ses moyens d'entraînement,
- la figure 4A est une vue latérale partielle de la figure 4 selon le plan de coupe A1-A1,
- la figure 5 est similaire aux figures 2 à 4 et représente le disque en position opérative,
- la figure 5A est une vue latérale de certains éléments représentés à la figure 5,
- la figure 6 représente l'élément de transfert tel qu'apparaissant aux figures 2 à 5, vu de l'arrière.

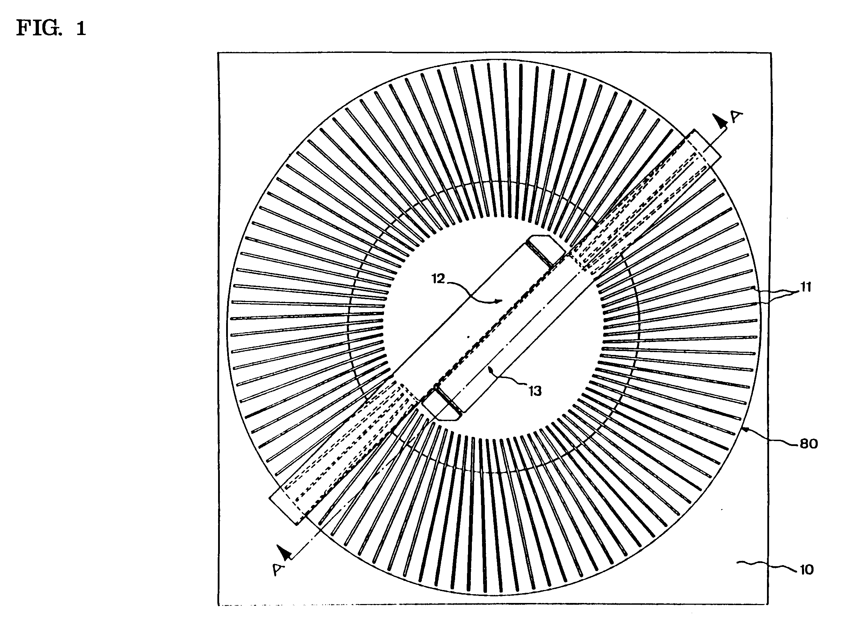

A la figure 1, on a représenté un changeur de type rotatif, c'est-à-dire comprenant un châssis 10, un magasin 80 de forme annulaire destiné à stocker des disques 11 et au centre duquel peuvent être montés deux dispositifs de chargement et de lecture 12, 13. Pour de plus amples détails, on se reportera avantageusement à la demande de brevet européen No EP-A-0.324.329 de la demanderesse.

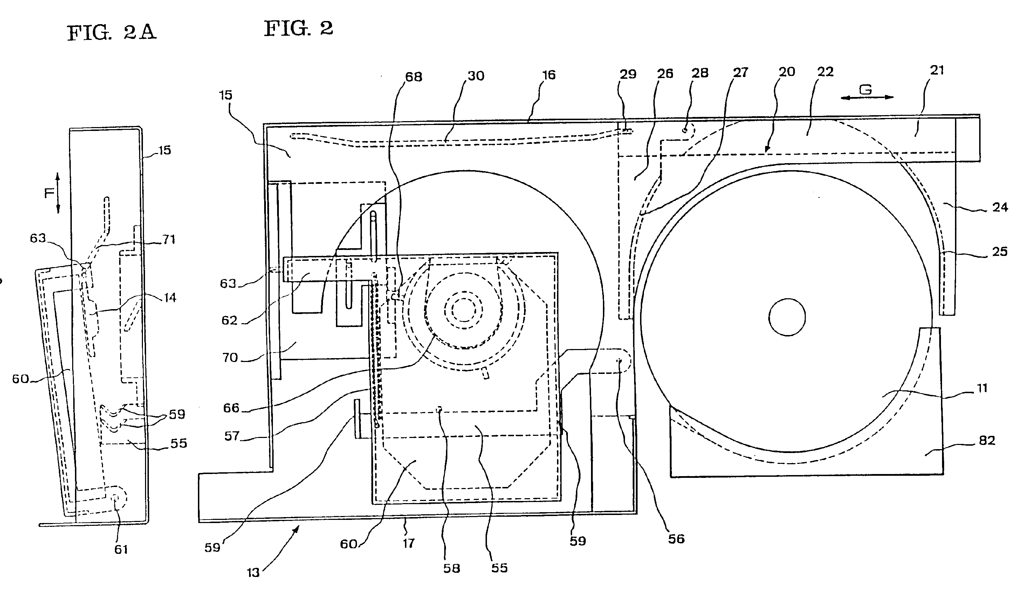

Comme représenté aux figures 2 à 5, les disques 11 sont stockés individuellement dans des alvéoles 82 de forme semi-circulaires emprisonnant la périphérie du disque sur plus d'un tiers de sa longueur afin que le disque reste bien stable dans sa position de stockage, quels que soient les mouvements impartis au changeur et notamment la rotation du magasin 80 pour assurer la sélection des disques 11.

Un dispositif de chargement et de lecture 13 ou 12 comprend un châssis 15 dont le bord supérieur 16 supporte et guide le dispositif de transfert 20 de disques 11 tandis que le bord inférieur 17 permet la fixation du dispositif sur le châssis 10 du changeur.

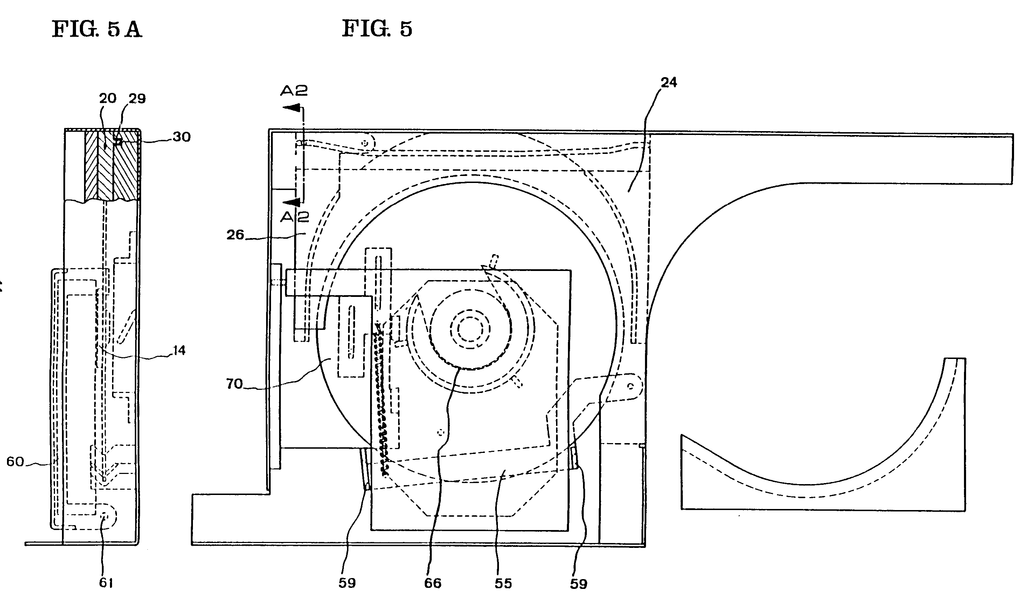

Le châssis 15 comporte un dispositif d'entraînement, de lecture et/ou d'enregistrement 60 monté en pivotement sur un axe horizontal 61 et une extrémité 62 porte un téton 63 s'engageant dans une gorge 71 pratiquée dans une coulisse 70 guidée par le châssis 15 à l'aide d'un dispositif classique combinant tétons et fentes. Cette coulisse 70 porte une denture (non représentée) coopérant avec un engrenage entraîné par un moteur (non représenté) de telle façon à être déplacée dans un sens ou l'autre (double flèche F - figure 2A) pour amener le dispositif de lecture 60 en position opérative (figures 5, 5A) respectivement inopérative (figures 2, 2A).

Entre ledit dispositif de lecture 60 et le châssis 15, se trouvent des moyens de clamage magnétique 66 mobiles entre une position opérative et une inopérative et coopérant avec les moyens d'entraînement 14 du disque 11 pour y plaquer et y maintenir tout disque amené en position opérative. Le déplacement des moyens de clamage magnétique 66 est également assuré par le mouvement de la coulisse 70 par action de celle-ci sur un téton 68 porté par lesdits moyens 66.

Le positionnement d'un disque 11 en face du dispositif d'entraînement et de lecture 60 est également assuré par deux pattes 59 en forme de V recevant la périphérie du disque et faisant partie d'un levier 55 pivotant autour d'un axe 56 et soumis à l'influence d'un ressort 57 le forçant à tourner horlogiquement ; sa course étant limitée par un téton 58 fixé au châssis 15.

Le levier 55 est pivoté dans le sens antihorlogique suite à la descente de la coulisse 70 qui agit sur la patte 59 se trouvant à sa proximité.

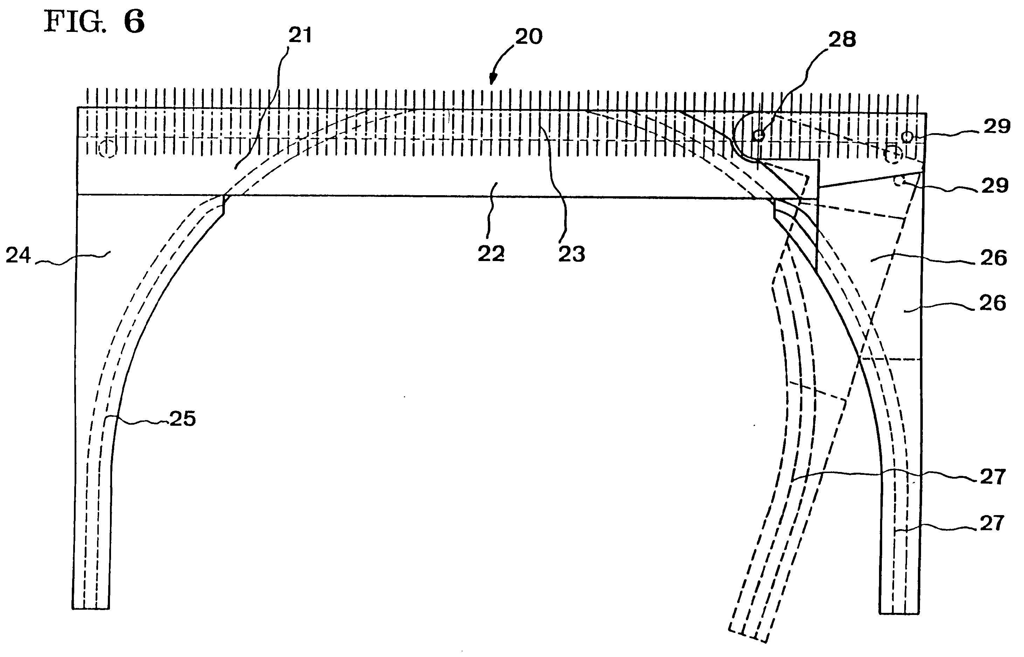

Comme représenté à la figure 6, le dispositif de transfert 20 a la forme d'un cadre et est principalement constitué d'un longeron 21 dont la partie centrale est munie d'un évidement 22 et dont la surface extérieure porte une crémaillère 23 destinée à coopérer avec un engrenage entraîné par un moteur (non représenté) et qui en assure la translation comme l'indique la double flèche G sur la figure 2.

Ce longeron 21 comporte une partie verticale fixe ou patte 24 dont le profil intérieur 25 est taillé en forme de V pour coopérer avec la périphérie des disques 11.

Un bras 26 ayant également son profil intérieur 27 taillé en forme de V pour coopérer avec la périphérie des disques 11 est monté en pivotement autour d'un axe 28 porté par le longeron 21 et comporte un téton 29 s'engageant dans une gorge 30 fixée au ou pratiquée dans le châssis 15. On a représenté en pointillés sur la figure 6 la position qu'occupe le bras 26 lorsqu'il est pivoté pour emprisonner un disque 11 par sa périphérie.

Comme le montre la figure 2, la dimension et la forme des éléments (21, 24, 25, 26, 27, 29, 30) constituant le dispositif de transfert 20 assurent en position de repos la liberté d'un mouvement relatif entre le magasin 80 et les dispositifs de chargement et de lecture 12, 13 pour assurer la sélection du disque 11 choisi.

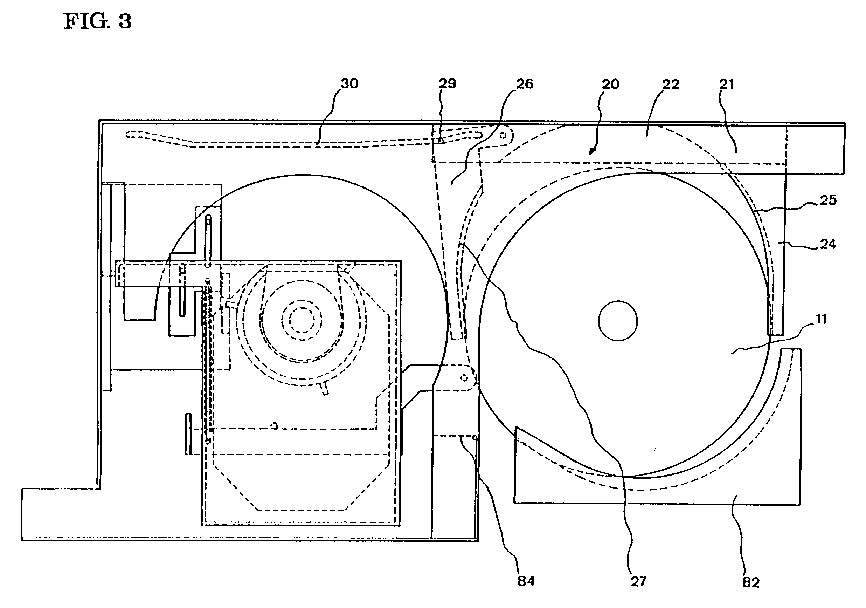

Comme on le constate à la figure 3, au début du mouvement de translation du dispositif de transfert 20, la coopération entre le téton 29 et la gorge 30 assure un pivotement dans le sens anti-horlogique du bras 26 ce qui a pour résultat de voir la périphérie du disque 11 emprisonnée au fond des deux profils 25 et 27. Le disque 11 peut alors rouler sur lui-même et donc suivre le profil du logement 82 puis le profil 84 assurant le guidage du disque 11 lors de son transfert grâce à l'évidement 22.

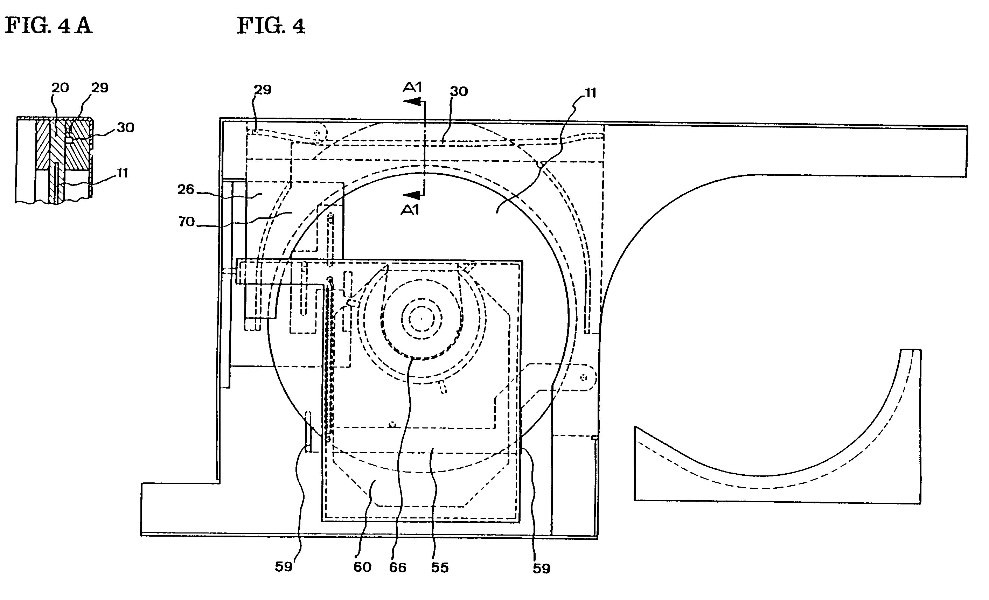

A la fin du mouvement de translation du dispositif de transfert 20 (figure 4), la coopération entre le téton 29 et la gorge 30 assure au bras 26 un pivotement dans le sens horlogique libérant ainsi totalement la périphérie du disque 11.

Le disque 11 se trouve alors positionné en face de ses éléments d'entraînement et de lecture 60 et voit sa périphérie supportée par les deux pattes 59 en forme de V du levier 55.

Simultanément, le mouvement de la coulisse 70 vers le bas assure (figures 5, 5A) : le clamage du disque 11 sur ses moyens d'entraînement par translation des moyens de clamage magnétique 66, le pivotement des moyens de lecture et d'entraînement 60, 14 autour de leur axe 61 et le pivotement vers le bas du levier 55 pour écarter les deux pattes 59 de la périphérie du disque 11.

Le disque 11, dont la périphérie est totalement libérée, peut alors être entraîné en rotation en vue de sa lecture et/ou de son enregistrement.

Le retour du disque 11 dans son logement se fait très exactement par le mouvement inverse à savoir simultanément : écartement des moyens de clamage magnétique 66 et d'entraînement 60, 14 du disque par déplacement de la coulisse 70 ramenant également les pattes 59 à la périphérie du disque tandis que le déplacement du dispositif de transfert 20 assure la préhension de la périphérie du disque 11 entre la patte 24 et le bras 26.

Le disque est alors ramené vers son logement en forme d'alvéole 82 dans lequel il roule étant guidé en cela par l'évidement 22, les profils 25 et 27 de la patte 24 et du bras 26. En fin de mouvement, le bras 26 effectue un pivotement horlogique libérant ainsi totalement la périphérie du disque 11 du dispositif de transfert. Le mouvement relatif entre le magasin 80 et les dispositifs de chargement et de lecture 12, 13 peut alors avoir lieu en vue de la sélection d'un autre disque.

Il est à noter que la dimension du dispositif de transfert 20 est telle que le mouvement relatif assurant la sélection des disques peut être effectué lorsque le dispositif de transfert se trouve dans la position représentée à la figure 5 permettant ainsi la sélection d'un disque pour l'un des dispositifs de lecture 12, 13 lorsque l'autre dispositif assure la lecture ou la reproduction d'un autre disque.

## Revendications

1. Dispositif de transfert (20) de supports d'informations assurant le déplacement d'un support d'informations d'un magasin (80) ou logement (82) dans lequel il est contenu en position de stockage vers un mécanisme (12, 13) en assurant la reproduction et/ou l'enregistrement d'informations et vice-versa, comprenant notamment un longeron (21) disposé latéralement par rapport au support d'informations, déplaçable longitudinalement et étant muni à une extrémité d'une patte (24), en substance perpendiculaire au longeron (21), pour coopérer avec la périphérie du support d'informations (11) lors de son déplacement entre sa position de stockage et sa position opérative et vice-versa, le déplacement du longeron (21) assurant le transfert dudit support d'informations, *caractérisé en ce que* le longeron (21) comporte à l'extrémité opposée de la patte (24) un bras mobile (26) coopérant également avec la périphérie du support d'informations (11) lors du déplacement de celui-ci entre sa position de stockage et sa position opérative et vice-versa et dont la position relative par rapport au longeron (21) et/ou la patte (24) est commandée par le déplacement du longeron (21).

2. Dispositif selon la revendication 1, *caractérisé en ce que* le bras mobile (26) comporte un téton (29) dont la coopération avec une pièce fixe (30) commande le mouvement relatif par rapport au dispositif (20) même.

3. Dispositif selon la revendication 2, *caractérisé en ce que* le bras mobile (26) coopère avec une gorge (30) pratiquée dans une partie ou pièce fixe du châssis (15).

4. Dispositif selon la revendication 1, *caractérisé en ce qu*'au moins une des faces du dispositif de transfert (20) coopérant avec la périphérie du support d'informations (11) possède un profil en forme de V.

5. Dispositif selon la revendication 1, *caractérisé en ce qu'*il possède un évidement interne (22) permettant un mouvement vertical relatif du support d'informations (11) lors de son mouvement de transfert.

6. Dispositif selon la revendication 1 pour application en cas de deux mécanismes (12, 13) disposés parallèlement l'un par rapport à l'autre, *caractérisé en ce que* ses éléments (21, 24, 26) constitutifs permettent la sélection de supports d'informations (11) aussi bien lorsqu'il est en position opérative que lorsqu'il est en position inopérative.

## Patentansprüche

1. Vorrichtung (20) zur Übertragung von Informationsträgern, die die Verschiebung eines Informationsträgers von einem Magazin (80) oder einem Aufnahmefach (82), in dem der Träger in der Speicherposition enthalten ist, zu einem Mechanismus (12, 13) die der Wiedergabe und/oder Aufzeichnung von Informationen erfüllt, und umgekehrt, bewirkt, wobei die Vorrichtung insbesondere einen Längsträger (21) aufweist, der relativ zum Informationsträger seitlich angeordnet, in Längsrichtung verschiebbar und an einem Ende mit einer Klaue (24) versehen ist, die im wesentlichen senkrecht zum Längsträger (21) ausgerichtet ist, um bei seiner Verschiebung mit der Peripherie des Informationsträgers (11) zwischen seiner Speicherposition und seiner Betriebsposition, und umgekehrt, zusammenzuarbeiten, wobei die Verschiebung des Längsträgers (21) die Übertragung des Informationsträgers bewirkt,
dadurch **gekennzeichnet**, daß der Längsträger (21) an dem der Klaue (24) entgegengesetzten Ende einen beweglichen Arm (26) aufweist, der ebenfalls mit der Peripherie des Informationsträgers (11) bei dessen Verschiebung zwischen seiner Speicherposition und seiner Betriebsposition, und umgekehrt, mitarbeitet, und dessen Relativposition in Bezug auf den Längsträger (21) und/oder die Klaue (24) durch die Verschiebung des Längsträgers (21) gesteuert wird.

2. Vorrichtung nach Anspruch 1,
dadurch **gekennzeichnet**, daß der bewegliche Arm (26) einen Zapfen (29) aufweist, dessen Zusammenarbeiten mit einem festen Bauteil (30) die Relativbewegung in Bezug auf die Vorrichtung (20) selber steuert.

3. Vorrichtung nach Anspruch 2,
dadurch **gekennzeichnet**, daß der bewegliche Arm (26) mit einer Rille (30) zusammenarbeitet, die in einen Abschnitt oder ein festes Bauteil des Chassis (15) eingearbeitet ist.

4. Vorrichtung nach Anspruch 1,
dadurch **gekennzeichnet**, daß mindestens eine der Seiten der Übertragungsvorrichtung (20), die mit der Peripherie des Inforamtionsträgers (11) zusammenarbeitet, ein V-förmiges Profil besitzt.

5. Vorrichtung nach Anspruch 1,
dadurch **gekennzeichnet**, daß sie eine innere Aussparung (22) besitzt, die eine relative senkrechte Bewegung des Informationsträgers (11) bei dessen Übertragungsbewegung ermöglicht.

6. Vorrichtung nach Anspruch 1 zur Verwendung im Falle von zwei Mechanismen (12, 13), die parallel zueinander angeordnet sind,
dadurch **gekennzeichnet**, daß seine Grundelemente (21, 24, 26) die Wahl der Informationsträger (11) sowohl dann, wenn sich die Vorrichtung in der Betriebsstellung befindet, als auch dann, wenn sie sich in der Ruhestelle befindet, ermöglichen.

## Claims

1. Transfer device (20) for information media, accomplishing the moving of an information medium from a magazine (80) or bay (82) in which it is contained in the storage position to a mechanism (12, 13) thereby performing the reproduction and/or recording of information and vice versa, comprising in particular a spar (21) arranged laterally with respect to the information medium, capable of moving longitudinally and being provided at one end with a leg (24), substantially perpendicular to the spar (21), in order to cooperate with the periphery of the information medium (11) during its movement between its storage position and its operative position and vice versa, the movement of the spar (21) accomplishing the transfer of the said information medium, characterized in that the spar (21) includes at the opposite end from the leg (24) a movable arm (26) likewise cooperating with the periphery of the information medium (11) during the movement of the latter between its storage position and its operative position and vice versa and whose relative position with respect to the spar (21) and/or the leg (24) is controlled by the movement of the spar (21).

2. Device according to Claim 1, characterized in that the movable arm (26) includes a stud (29), the cooperating of which with a fixed component (30) controls the relative motion with respect to the device (20).

3. Device according to Claim 2, characterized in that the movable arm (26) cooperates with a groove (30) made in a fixed part or component of the chassis (15).

4. Device according to Claim 1, characterized in that at least one of the faces of the transfer device (20) cooperating with the periphery of the information medium (11) possesses a V-shaped profile.

5. Device according to Claim 1, characterized in that it possesses an internal recess (22) allowing a relative vertical motion of the information medium (11) during its transfer motion.

6. Device according to Claim 1 for application in the case of two mechanisms (12, 13) arranged parallel to one another, characterized in that its constituent elements (21, 24, 26) allow selection of information media (11) either when it is in the operative position or when it is in the inoperative position.
